# EUROPEAN PATENT SPECIFICATION

(11) **EP 3 546 216 B1**
(45) Date of publication and mention of the grant of the patent: **18.05.2022**
(21) Application number: 19162249.7
(22) Date of filing: 12.03.2019
(51) Int. Cl.: B41J 2/045

(54) **PRINTING APPARATUS AND DISCHARGE STATUS JUDGMENT METHOD**
DRUCKVORRICHTUNG UND VERFAHREN ZUR BEURTEILUNG DES AUSSTOSSSTATUS
IMPRIMANTE ET PROCÉDÉ D'ÉVALUATION D'ÉTAT DE DÉCHARGE

(30) Priority: 28.03.2018 JP 2018062260
(43) Date of publication of application: 02.10.2019
(73) Proprietor: CANON KABUSHIKI KAISHA, Ohta-ku Tokyo 146-8501 (JP)
(72) Inventor: OIKAWA, Yuhei, Tokyo, 146-8501 (JP); HAYASHI, Masashi, Tokyo, 146-8501 (JP); CHIKUMA, Toshiyuki, Tokyo, 146-8501 (JP); KANO, Yutaka, Tokyo, 146-8501 (JP)
(74) Representative: WESER & Kollegen Patentanwälte PartmbB

(56) References cited:
- US-A1- 2010 156 978
- US-A1- 2011 211 000
- US-B2- 7 914 106

## Description

### BACKGROUND OF THE INVENTION

### Field of the Invention

The present invention relates to a printing apparatus and a discharge status judgment method and, more particularly, to, for example, a printing apparatus to which a printhead incorporating an element substrate with a plurality of print elements is applied to perform printing in accordance with an inkjet method, and a discharge status judgment method.

### Description of the Related Art

One of inkjet printing methods of discharging ink droplets from nozzles and adhering them to a paper sheet, a plastic film, or another print medium uses a printhead with print elements that generate thermal energy to discharge ink. As for a printhead according to this method, an electrothermal transducer that generates heat in accordance with supply of an electric current, a drive circuit for it, and the like can be formed using the same process as a semiconductor manufacturing process. Therefore, this has the advantage in that high density implementation of nozzles is easy and higher-resolution printing can be achieved.

In this printhead, an ink discharge failure may occur in all or some of the nozzles of the printhead due to a factor such as clogging of a nozzle caused by a foreign substance or ink whose viscosity increases, bubbles trapped in an ink supply channel or a nozzle, or a change in wettability on a nozzle surface. To avoid degradation in image quality caused when such discharge failure occurs, a recovery operation of recovering an ink discharge status and a complementary operation by other nozzles are preferably, quickly executed. However, to execute these operations quickly, it is very important to correctly and appropriately judge the ink discharge status and the occurrence of the discharge failure.

Taking this background into consideration, there are conventionally proposed various ink discharge status judgment methods and complementary printing methods, and apparatuses to which these methods are applied.

Japanese Patent Laid-Open No. 2008-000914 discloses a method of detecting a decrease in temperature at the time of normal discharge to detect a failure of ink discharge from a printhead. According to Japanese Patent Laid-Open No. 2008-000914, at the time of normal discharge, a point (feature point) at which a temperature drop rate changes appears after a predetermined time elapses after the time when a detected temperature reaches a highest temperature but no such point appears at the time of a discharge failure. Therefore, the ink discharge status is judged by detecting the presence/absence of the feature point. Furthermore, Japanese Patent Laid-Open No. 2008-000914 discloses an arrangement in which a temperature detection element is provided immediately below a print element that generates thermal energy for ink discharge, and discloses, as a method of detecting the presence/absence of the feature point, a method of detecting the feature point as a peak value by differential processing of a change in temperature.

The discharge status judgment method disclosed in Japanese Patent Laid-Open No. 2008-000914 assumes the arrangement in which the temperature detection element is provided immediately below the print element that generates thermal energy for ink discharge. Thus, the sensitivity of the temperature detection element changes due to a temporal change in resistance value of the temperature detection element, which is caused by the influence of heat generated at the time of ink discharge or a change in status of a protection film for protecting the print element, which is caused by repeating an ink discharge operation. This means that the detected temperature of the temperature detection element varies in accordance with the use of the print element. As a result of the variation, it is assumed that it becomes impossible to judge the ink discharge status correctly.

US 7 914 106 B2 discloses a recording apparatus having a recording head which applies thermal energy to ink so that the ink is discharged from a nozzle, and which inspects a discharge status.

### SUMMARY OF THE INVENTION

Accordingly, the present invention is conceived as a response to the above-described disadvantages of the conventional art.

For example, a printing apparatus and a discharge status judgment method according to this invention are capable of, for example, judging an ink discharge status correctly even if the sensitivity of a temperature detection element changes due to the use of a print element.

The present invention in its first aspect provides a printing apparatus as specified in claims 1 to 11, 14, and 15.

The present invention in its second aspect provides a discharge status judgment method as specified in claims 12 to 13.

The invention is particularly advantageous since it is possible to judge an ink discharge status correctly even if the sensitivity of a temperature detection element changes due to the use of a print element.

Further features of the present invention will become apparent from the following description of exemplary embodiments with reference to the attached drawings.

### BRIEF DESCRIPTION OF THE DRAWINGS

Fig. 1 is a perspective view for explaining the structure of a printing apparatus including a full-line printhead according to an exemplary embodiment of the present invention;
Fig. 2 is a block diagram showing the control arrangement of the printing apparatus shown in Fig. 1;
Figs. 3A, 3B, and 3C are views each showing the multilayer wiring structure near a print element formed on a silicon substrate;
Fig. 4 is a block diagram showing a temperature detection control arrangement using the element substrate shown in Figs. 3A, 3B, and 3C;
Fig. 5 is a view showing a temperature waveform output from a temperature detection element and a temperature change signal of the waveform when applying a drive pulse to the print element;
Figs. 6A, 6B, and 6C are timing charts each showing the waveform of the temperature change signal (dT/dt) based on the temperature waveform signal detected by the temperature detection element;
Fig. 7 is a flowchart illustrating an overview of discharge judgment processing;
Fig. 8 is a flowchart illustrating processing of specifying a change point of an inspection result according to the first embodiment; and
Fig. 9 is a flowchart illustrating discharge inspection threshold value reset processing according to the second embodiment.

### DESCRIPTION OF THE EMBODIMENTS

Exemplary embodiments of the present invention will now be described in detail in accordance with the accompanying drawings.

In this specification, the terms "print" and "printing" not only include the formation of significant information such as characters and graphics, but also broadly includes the formation of images, figures, patterns, and the like on a print medium, or the processing of the medium, regardless of whether they are significant or insignificant and whether they are so visualized as to be visually perceivable by humans.

Also, the term "print medium (or sheet)" not only includes a paper sheet used in common printing apparatuses, but also broadly includes materials, such as cloth, a plastic film, a metal plate, glass, ceramics, wood, and leather, capable of accepting ink.

Furthermore, the term "ink" (to be also referred to as a "liquid" hereinafter) should be broadly interpreted to be similar to the definition of "print" described above. That is, "ink" includes a liquid which, when applied onto a print medium, can form images, figures, patterns, and the like, can process the print medium, and can process ink. The process of ink includes, for example, solidifying or insolubilizing a coloring agent contained in ink applied to the print medium.

Further, a "nozzle" generically means an ink orifice or a liquid channel communicating with it, unless otherwise specified, and a "print element" is provided in correspondence to an orifice, and means an element for generating energy used to discharge ink. For example, the print element may be provided in a position opposing to the orifice.

An element substrate for a printhead (head substrate) used below means not merely a base made of a silicon semiconductor, but an arrangement in which elements, wirings, and the like are arranged.

Further, "on the substrate" means not merely "on an element substrate", but even "the surface of the element substrate" and "inside the element substrate near the surface". In the present invention, "built-in" means not merely arranging respective elements as separate members on the base surface, but integrally forming and manufacturing respective elements on an element substrate by a semiconductor circuit manufacturing process or the like.

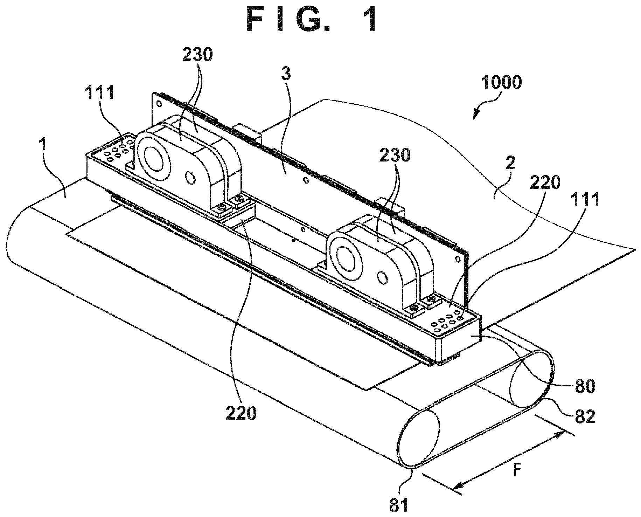

### <Printing Apparatus Mounted with Full-Line Printhead (Fig. 1)>

Fig. 1 is a perspective view showing the schematic arrangement of a printing apparatus 1000 using a full-line printhead that performs printing by discharging ink according to an exemplary embodiment of the present invention.

As shown in Fig. 1, the printing apparatus 1000 is a line type printing apparatus that includes a conveyance unit 1 that conveys a print medium 2 and a full-line printhead 3 arranged to be approximately orthogonal to the conveyance direction of the print medium 2, and performs continuous printing while conveying the plurality of print media 2 continuously or intermittently. The full-line printhead 3 includes ink orifices arrayed in a direction intersecting the conveyance direction of the printing medium. The full-line printhead 3 is provided with a negative pressure control unit 230 that controls the pressure (negative pressure) in an ink channel, a liquid supply unit 220 that communicates with the negative pressure control unit 230, and a liquid connecting portion 111 that serves as an ink supply and discharge port to the liquid supply unit 220.

A housing 80 is provided with the negative pressure control unit 230, the liquid supply unit 220, and the liquid connecting portion 111.

Note that the print medium 2 is not limited to a cut sheet, and may be a continuous roll sheet.

The full-line printhead (to be referred to as the printhead hereinafter) 3 can perform full-color printing by cyan (C), magenta (M), yellow (Y), and black (K) inks. A main tank and the liquid supply unit 220 serving as a supply channel for supplying ink to the printhead 3 are connected to the printhead 3. An electric controller (not shown) that transmits power and a discharge control signal to the printhead 3 is electrically connected to the printhead 3.

The print medium 2 is conveyed by rotating two conveyance rollers 81 and 82 provided apart from each other by a distance of F in the conveyance direction of the print medium 2.

The printhead 3 according to this embodiment employs the inkjet method of discharging ink using thermal energy. Therefore, each orifice of the printhead 3 includes an electrothermal transducer (heater). The electrothermal transducer is provided in correspondence with each orifice. When a pulse voltage is applied to the corresponding electrothermal transducer in accordance with a print signal, ink is heated and discharged from the corresponding orifice. Note that the printing apparatus is not limited to the above-described printing apparatus using the full-line printhead whose printing width corresponds to the width of the print medium. For example, the present invention is also applicable to a so-called serial type printing apparatus that mounts, on a carriage, a printhead in which orifices are arrayed in the conveyance direction of the print medium and performs printing by discharging ink to the print medium while reciprocally scanning the carriage.

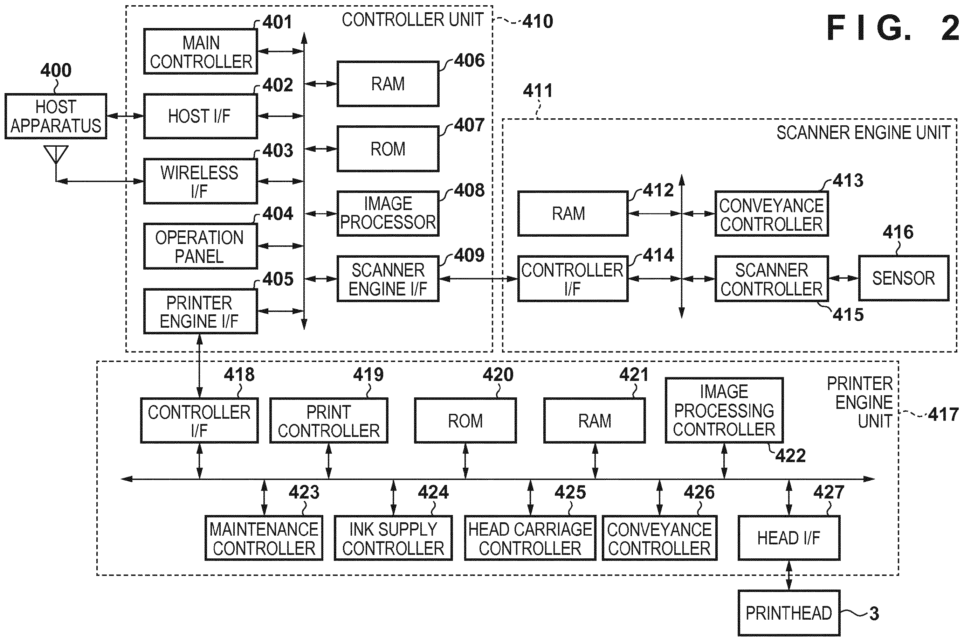

### <Explanation of Control Arrangement (Fig. 2)>

Fig. 2 is a block diagram showing the arrangement of the control circuit of the printing apparatus 1000.

As shown in Fig. 2, the printing apparatus 1000 is formed by a printer engine unit 417 that mainly controls a printing unit, a scanner engine unit 411 that controls a scanner unit, and a controller unit 410 that controls the overall printing apparatus 1000. A print controller 419 integrating an MPU and a non-volatile memory (EEPROM or the like) controls various mechanisms of the printer engine unit 417 in accordance with an instruction from a main controller 401 of the controller unit 410. The various mechanisms of the scanner engine unit 411 are controlled by the main controller 401 of the controller unit 410.

Details of the control arrangement will be described below.

In the controller unit 410, the main controller 401 formed by a CPU controls the overall printing apparatus 1000 by using a RAM 406 as a work area in accordance with a program and various parameters stored in a ROM 407. For example, if a print job is input from a host apparatus 400 via a host I/F 402 or a wireless I/F 403, an image processor 408 performs predetermined image processing for received image data in accordance with an instruction from the main controller 401. The main controller 401 transmits, to the printer engine unit 417 via a printer engine I/F 405, the image data having undergone the image processing.

Note that the printing apparatus 1000 may obtain image data from the host apparatus 400 via wireless or wired communication, or obtain image data from an external storage device (USB memory or the like) connected to the printing apparatus 1000. A communication method used for wireless or wired communication is not limited. For example, as a communication method used for wireless communication, Wi-Fi (Wireless Fidelity)^{®} or Bluetooth^{®} is applicable. Furthermore, as a communication method used for wired communication, USB (Universal Serial Bus) or the like is applicable. For example, if a read command is input from the host apparatus 400, the main controller 401 transmits the command to the scanner engine unit 411 via a scanner engine I/F 409.

An operation panel 404 is a unit used by the user to perform an input/output operation for the printing apparatus 1000. The user can instruct an operation such as a copy or scan operation via the operation panel 404, set a print mode, and recognize information from the printing apparatus 1000.

In the printer engine unit 417, the print controller 419 formed by a CPU controls the various mechanisms of the printer engine unit 417 by using a RAM 421 as a work area in accordance with a program and various parameters stored in a ROM 420.

Upon receiving various commands or image data via a controller I/F 418, the print controller 419 temporarily saves the received data in the RAM 421. So as to use the printhead 3 for a print operation, the print controller 419 causes an image processing controller 422 to convert the saved image data into print data. When the print data is generated, the print controller 419 causes, via a head I/F 427, the printhead 3 to execute a print operation based on the print data. At this time, the print controller 419 drives the conveyance rollers 81 and 82 via a conveyance controller 426 to convey the print medium 2. In accordance with an instruction from the print controller 419, a print operation is executed by the printhead 3 in synchronism with the conveyance operation of the print medium 2, thereby performing print processing.

A head carriage controller 425 changes the orientation and position of the printhead 3 in accordance with an operation status such as the maintenance status or print status of the printing apparatus 1000. An ink supply controller 424 controls the liquid supply unit 220 so that the pressure of ink supplied to the printhead 3 falls within an appropriate range. A maintenance controller 423 controls the operation of a cap unit or wiping unit in a maintenance unit (not shown) when performing a maintenance operation for the printhead 3.

In the scanner engine unit 411, the main controller 401 controls the hardware resources of a scanner controller 415 by using the RAM 406 as a work area in accordance with a program and various parameters stored in the ROM 407. This controls the various mechanisms of the scanner engine unit 411. For example, the main controller 401 controls the hardware resources in the scanner controller 415 via a controller I/F 414, and conveys, via a conveyance controller 413, a document stacked on an ADF (not shown) by the user, thereby reading the document by a sensor 416. Then, the scanner controller 415 saves read image data in a RAM 412.

Note that the print controller 419 can cause the printhead 3 to execute a print operation based on the image data read by the scanner controller 415 by converting, into print data, the image data obtained as described above.

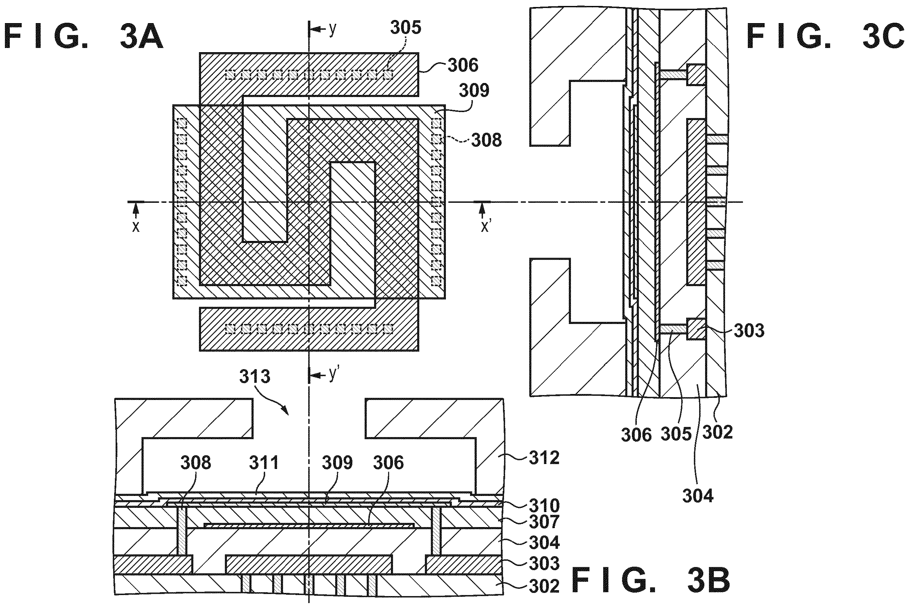

### <Explanation of Arrangement of Temperature Detection Element (Figs. 3A to 3C)>

Figs. 3A to 3C are views each showing the multilayer wiring structure near a print element formed on a silicon substrate.

Fig. 3A is a plan view showing a state in which a temperature detection element 306 is arranged in the form of a sheet in a layer below a print element 309 via an interlayer insulation film 307. Fig. 3B is a sectional view taken along a broken line x - x' in the plan view shown in Fig. 3A. Fig. 3C is another sectional view taken along a broken line y - y' shown in Fig. 3A.

In the x - x' sectional view shown in Fig. 3B and the y - y' sectional view shown in Fig. 3C, a wiring 303 made of aluminum or the like is formed on an insulation film 302 layered on the silicon substrate, and an interlayer insulation film 304 is further formed on the wiring 303. The wiring 303 and the temperature detection element 306 serving as a thin film resistor formed from a layered film of titanium and titanium nitride or the like are electrically connected via conductive plugs 305 which are embedded in the interlayer insulation film 304 and made of tungsten or the like.

Next, the interlayer insulation film 307 is formed above the temperature detection element 306. The wiring 303 and the print element 309 serving as a heating resistor formed by a tantalum silicon nitride film or the like are electrically connected via conductive plugs 308 which penetrate through the interlayer insulation film 304 and the interlayer insulation film 307, and made of tungsten or the like.

Note that when connecting the conductive plugs in the lower layer and those in the upper layer, they are generally connected by sandwiching a spacer formed by an intermediate wiring layer. When applied to this embodiment, since the film thickness of the temperature detection element serving as the intermediate wiring layer is as small as about several ten nm, the accuracy of overetching control with respect to a temperature detection element film serving as the spacer is required in a via hole process. In addition, the thin film is also disadvantageous in pattern miniaturization of a temperature detection element layer. In consideration of this situation, in this embodiment, the conductive plugs which penetrate through the interlayer insulation film 304 and the interlayer insulation film 307 are employed.

To ensure the reliability of conduction in accordance with the depths of the plugs, in this embodiment, each conductive plug 305 which penetrates one interlayer insulation film has a bore of 0.4 µm, and each conductive plug 308 which penetrates two interlayer insulation films has a larger bore of 0.6 µm.

Next, a head substrate (element substrate) is obtained by forming a protection film 310 such as a silicon nitride film, and then forming an anti-cavitation film 311 that contains tantalum or the like on the protection film 310. Furthermore, an orifice 313 is formed by a nozzle forming material 312 containing a photosensitive resin or the like.

As described above, the multilayer wiring structure in which an independent intermediate layer of the temperature detection element 306 is provided between the layer of the wiring 303 and the layer of the print element 309 is employed.

With the above arrangement, in the element substrate used in this embodiment, it is possible to obtain, for each print element, temperature information by the temperature detection element provided in correspondence with each print element.

Based on the temperature information detected by the temperature detection element and a change in temperature, a logic circuit (inspection circuit) provided in the element substrate can obtain a judgment result signal RSLT indicating the status of ink discharge from the corresponding print element. The judgment result signal RSLT is a 1-bit signal, and "1" indicates normal discharge and "0" indicates a discharge failure.

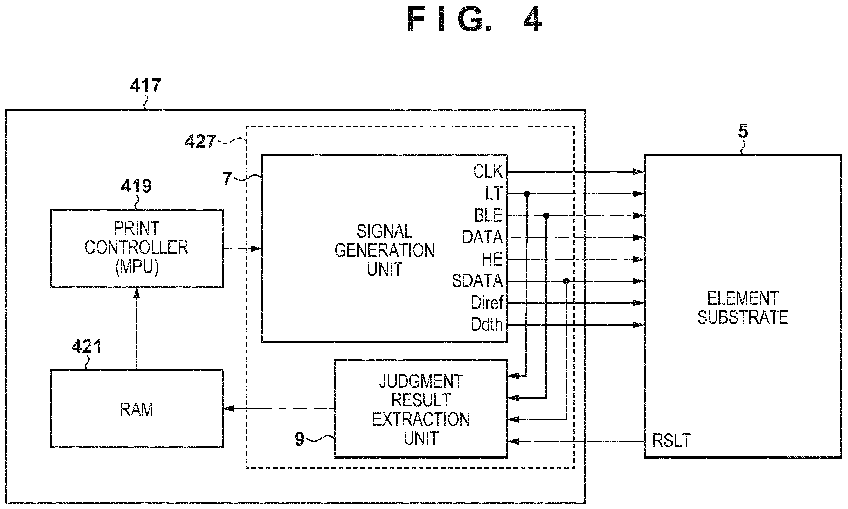

### <Explanation of Temperature Detection Arrangement (Fig. 4)>

Fig. 4 is a block diagram showing a temperature detection control arrangement using the element substrate shown in Figs. 3A to 3C.

As shown in Fig. 4, to detect the temperature of the print element integrated in an element substrate 5, the printer engine unit 417 includes the print controller 419 integrating the MPU, the head I/F 427 for connection to the printhead 3, and the RAM 421. Furthermore, the head I/F 427 includes a signal generation unit 7 that generates various signals to be transmitted to the element substrate 5, and a judgment result extraction unit 9 that receives the judgment result signal RSLT output from the element substrate 5 based on the temperature information detected by the temperature detection element 306.

For temperature detection, when the print controller 419 issues an instruction to the signal generation unit 7, the signal generation unit 7 outputs a clock signal CLK, a latch signal LT, a block signal BLE, a print data signal DATA, and a heat enable signal HE to the element substrate 5. The signal generation unit 7 also outputs a sensor selection signal SDATA, a constant current signal Diref, and a discharge inspection threshold signal Ddth.

The sensor selection signal SDATA includes selection information for selecting the temperature detection element to detect the temperature information, energization quantity designation information to the selected temperature detection element, and information pertaining to an output instruction of the judgment result signal RSLT. If, for example, the element substrate 5 is configured to integrate five print element arrays each including a plurality of print elements, the selection information included in the sensor selection signal SDATA includes array selection information for designating an array and print element selection information for designating a print element of the array. On the other hand, the element substrate 5 outputs the 1-bit judgment result signal RSLT based on the temperature information detected by the temperature detection element corresponding to the one print element of the array designated by the sensor selection signal SDATA.

A value of "1" indicating normal discharge and a value of "0" indicating a discharge failure, which are output from the judgment result signal RSLT, are obtained by comparing, in the element substrate 5, the temperature information output from the temperature detection element and discharge inspection threshold voltage (TH) indicated by the discharge inspection threshold signal Ddth. This comparison processing will be described in detail later.

Note that this embodiment employs an arrangement in which the 1-bit judgment result signal RSLT is output for the print elements of the five arrays. Therefore, in an arrangement in which the element substrate 5 integrates 10 print element arrays, the judgment result signal RSLT is a 2-bit signal, and this 2-bit signal is serially output to the judgment result extraction unit 9 via one signal line.

As is apparent from Fig. 4, the latch signal LT, the block signal BLE, and the sensor selection signal SDATA are fed back to the judgment result extraction unit 9. On the other hand, the judgment result extraction unit 9 receives the judgment result signal RSLT output from the element substrate 5 based on the temperature information detected by the temperature detection element, and extracts a judgment result during each latch period in synchronism with the fall of the latch signal LT. If the judgment result indicates a discharge failure, the block signal BLE and the sensor selection signal SDATA corresponding to the judgment result are stored in the RAM 421.

The print controller 419 erases a signal for the discharge failure nozzle from the print data signal DATA of a corresponding block based on the block signal BLE and the sensor selection signal SDATA which have been used to drive the discharge failure nozzle and stored in the RAM 421. The print controller 419 adds a nozzle for complementing a non-discharge nozzle to the print data signal DATA of the corresponding block instead, and outputs the signal to the signal generation unit 7.

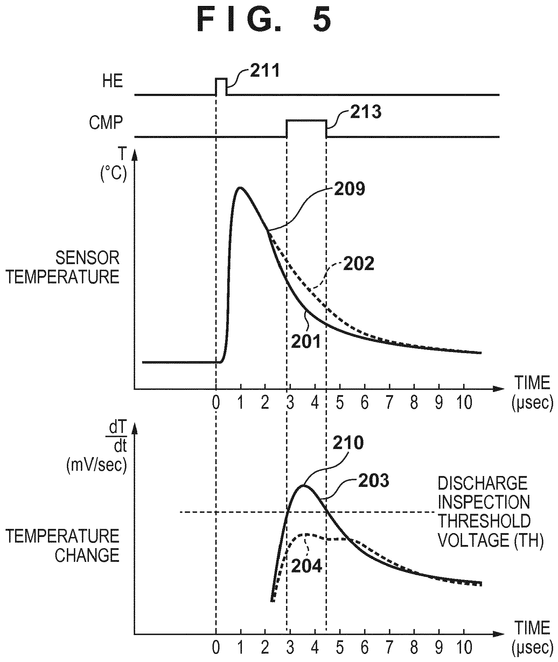

### <Explanation of Discharge Status Judgment Method (Figs. 5 to 6C)>

Fig. 5 is a view showing a temperature waveform (sensor temperature: T) output from a temperature detection element and a temperature change signal (dT/dt) of the waveform when applying a drive pulse to the print element.

Note that in Fig. 5, the temperature waveform (sensor temperature: T) is represented by a temperature (°C). In fact, a constant current is supplied to the temperature detection element and a voltage (V) between the terminals of the temperature detection element is detected. Since this detected voltage has temperature dependence, the detected voltage is converted into a temperature and indicated as the temperature in Fig. 5. The temperature change signal (dT/dt) is indicated as a temporal change (mV/sec) in detected voltage.

As shown in Fig. 5, if ink is discharged normally when a driving pulse 211 is applied to the print element 309 (normal discharge), a waveform 201 is obtained as the output waveform of the temperature detection element 306. In a temperature drop process of the temperature detected by the temperature detection element 306, which is represented by the waveform 201, a feature point 209 appears when the tail (satellite) of an ink droplet discharged from the print element 309 drops to the interface of the print element 309 and cool the interface at the time of normal discharge. After the feature point 209, the waveform 201 indicates that the temperature drop rate increases abruptly. On the other hand, at the time of a discharge failure, a waveform 202 is obtained as the output waveform of the temperature detection element 306. Unlike the waveform 201 at the time of normal discharge, no feature point 209 appears, and the temperature drop rate gradually decreases in a temperature drop process.

The lowermost timing chart of Fig. 5 shows the temperature change signal (dT/dt), and a waveform 203 or 204 represents a waveform obtained after processing the output waveform 201 or 202 of the temperature detection element into the temperature change signal (dT/dt). A method of performing conversion into the temperature change signal at this time is appropriately selected in accordance with a system. The temperature change signal (dT/dt) according to this embodiment is represented by a waveform output after the temperature waveform is processed by a filter circuit (one differential operation in this arrangement) and an inverting amplifier.

In the waveform 203, a peak 210 deriving from the highest temperature drop rate after the feature point 209 of the waveform 201 appears. The waveform (dT/dt) 203 is compared with a discharge inspection threshold voltage (TH) preset in a comparator integrated in the element substrate 5, and a pulse indicating normal discharge in a period (dT/dt ≥ TH) in which the waveform 203 exceeds the discharge inspection threshold voltage (TH) appears in a judgment signal (CMP) 213.

On the other hand, since no feature point 209 appears in the waveform 202, the temperature drop rate is low, and the peak appearing in the waveform 204 is lower than the discharge inspection threshold voltage (TH). The waveform (dT/dt) 202 is also compared with the discharge inspection threshold voltage (TH) preset in the comparator integrated in the element substrate 5. In a period (dT/dt < TH) in which the waveform 202 is below the discharge inspection threshold voltage (TH), no pulse appears in the judgment signal (CMP) 213.

Therefore, by obtaining this judgment signal (CMP), it is possible to grasp the discharge status of each nozzle. This judgment signal (CMP) serves as the above-described judgment result signal RSLT.

### · Problem of Judgment of Discharge Status

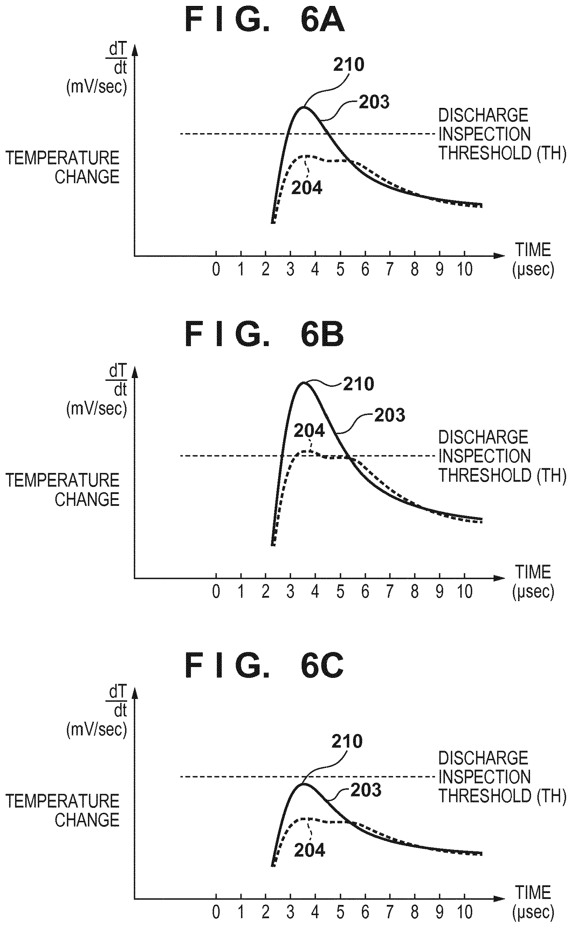

Figs. 6A to 6C are timing charts each showing the waveform of the temperature change signal (dT/dt) based on the temperature waveform signal detected by the temperature detection element.

Fig. 6A is a timing chart showing the profile of the temperature change when discharge judgment is performed correctly. The discharge inspection threshold voltage (TH) is set between the waveform 203 at the time of normal discharge and the waveform 204 at the time of a discharge failure. Therefore, by comparing the discharge inspection threshold voltage (TH) and the temperature change signal (dT/dt) with each other, the discharge status can be discriminated correctly.

As described above, the element substrate employs an arrangement in which the temperature detection element is provided immediately below the print element serving as a heating resistor (electrothermal transducer). This causes a manufacturing variation of the temperature detection element, a temporal change in resistance value of the temperature detection element by the influence of heat generated at the time of ink discharge, deterioration of the protection film of the print element by repeating an ink discharge operation, and a change in sensitivity of the temperature detection element by deposition of pigment or polymer contained in ink. This indicates that the detected temperature of the temperature detection element varies in accordance with the use of each print element. As a result of the variation, it may be impossible to judge the ink discharge status correctly.

Fig. 6B shows an example of a case in which, as a result of the distance between the print element and the temperature detection element being relatively shorter due to deterioration of the protection film of the print element or the like, the sensitivity of detecting a change in temperature on the print element becomes high. In this case, even if the preset discharge inspection threshold voltage (TH) and the temperature change signal (dT/dt) are compared with each other, the value of the waveform 204 is higher than the discharge inspection threshold voltage (TH) and normal discharge is erroneously judged, although the print element is actually in a discharge failure status.

Fig. 6C shows an example in which when the pigment or polymer component of ink is adhered/deposited onto the print element to form a deposition layer on the print element, the sensitivity of detecting a change in temperature on the print element decreases. In this case, even if the preset discharge inspection threshold voltage (TH) and the temperature change signal (dT/dt) are compared with each other, the value of the waveform 203 is lower than the discharge inspection threshold voltage (TH) and a discharge failure is erroneously judged, although the print element is actually in a normal discharge status.

As described above, since the sensitivity of the temperature detection element changes in accordance with the use of each print element, it may become impossible to detect the discharge status correctly. In this embodiment, to solve this problem, a method of setting an appropriate discharge inspection threshold value even if the sensitivity of the temperature detection element changes for each print element will be described.

### [First Embodiment]

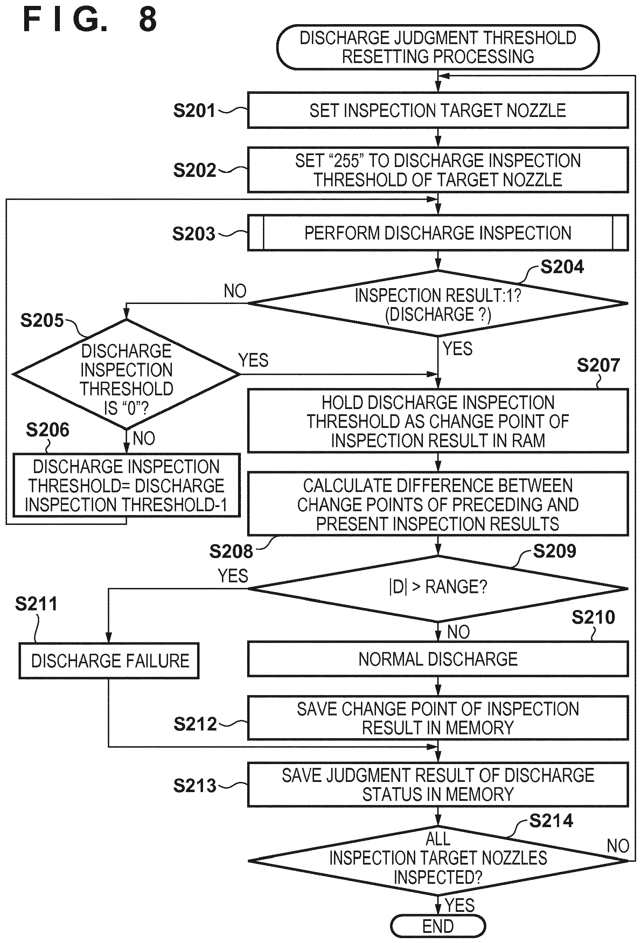

After a description of an overview of discharge judgment processing, discharge inspection threshold value reset processing for preventing an erroneous judgment made due to a variation in discharge inspection threshold value caused by the use status of the print element, which is performed when discharge judgment processing using the temperature detection element is executed, will be described with reference to a flowchart shown in Fig. 8.

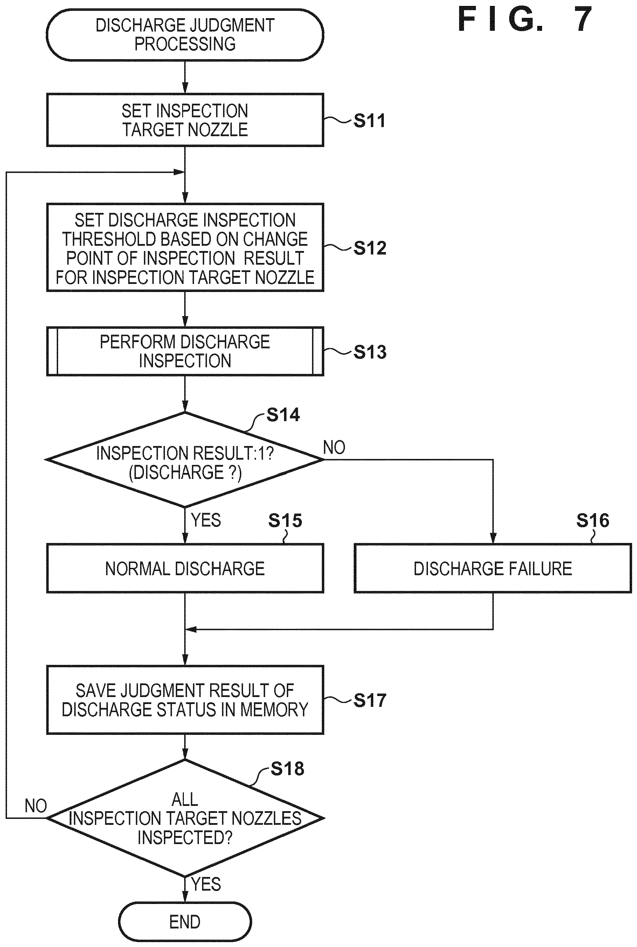

Fig. 7 is a flowchart illustrating an overview of the discharge judgment processing. Fig. 8 is a flowchart illustrating the discharge inspection threshold value reset processing.

The discharge judgment processing shown in Fig. 7 is executed at any desired timing, and judges the discharge status of each nozzle at the time of execution of the processing.

In step S11, a print controller 419 instructs an inspection target nozzle (print element), and a signal generation unit 7 selects the inspection target nozzle by a sensor selection signal SDATA in accordance with the instruction. In step S12, a discharge inspection threshold voltage (TH) is set based on the change point of the current inspection result of the selected nozzle. As the discharge inspection threshold voltage (TH), a voltage lower than the change point of the inspection result by a predetermined amount is set in consideration of the characteristic of the temperature detection element, the ink characteristic, a detection error, a variation of repetitive inspection, the tolerable variation of the change point of the inspection result, an update frequency, and the like. This change point of the inspection result can be obtained by executing the discharge threshold value reset processing (to be described later), and is updated at each predetermined timing. The predetermined timing is set by a paper feeding count, a print dot count, time, an elapsed period after last inspection, a timing for each print job, a timing for each print page, a timing of replacement of the printhead, a timing of recovery processing of the printhead, or the like, and is set appropriately in accordance with a system.

In step S13, discharge inspection is executed by using the discharge inspection threshold voltage (TH) calculated based on the change point of the inspection result. In step S14, it is checked whether the discharge status of the selected nozzle is a normal discharge status or a discharge failure status. If a judgment result signal RSLT is "1", the process advances to step S15, and it is judged that the selected nozzle is in the normal discharge status. On the other hand, if the judgment result signal RSLT is "0", the process advances to step S16, and it is judged that the selected nozzle is in the discharge failure status.

In step S17, the discharge status of the selected nozzle is saved in a RAM 421. In step S18, it is checked whether all target nozzles have been inspected. If it is determined that inspection is to continue, the process returns to step S11 to select another inspection target nozzle, and then the processes in step S12 and the subsequent steps are executed. On the other hand, if it is determined that inspection is to end, the discharge judgment processing ends.

After that, image quality correction control, recovery processing, and the like are executed in accordance with the discharge status judgment result.

A method of specifying the change point of the inspection result of each nozzle necessary to reset the discharge inspection threshold value will be described next.

Fig. 8 is a flowchart illustrating the processing of specifying the change point of the inspection result.

In step S201, a target nozzle of the reset of the discharge inspection threshold value is set. This is done by performing the same processing as in step S11 of Fig. 7. Next, in step S202, the discharge inspection threshold voltage (TH) of the target nozzle is set to "255".

As is apparent from Figs. 5 to 6C, the discharge inspection threshold voltage (TH) is compared with the temperature change (dT/dt) of the detected temperature output from the temperature detection element. The value of this temperature change is physically expressed in a unit of mV/sec. In this embodiment, however, this value is quantumly expressed by 8 bits. Thus, "255" as the maximum value of the 8-bit representation is temporarily set as the value of the discharge inspection threshold voltage (TH).

In step S203, discharge inspection is executed using the set discharge inspection threshold voltage (TH). The discharge inspection processing is the same as in step S13 of Fig. 7. In step S204, it is checked based on the set discharge inspection threshold voltage (TH) whether the discharge status of the selected nozzle is the normal discharge status or the discharge failure status. If the judgment result signal RSLT is "1", the process advances to step S207. If the judgment result signal RSLT is "0", the process advances to step S205. In step S205, it is checked whether the discharge inspection threshold voltage (TH) is "0", that is, the minimum value. If the discharge inspection threshold voltage (TH) is "0", the process advances to step S207; otherwise, the process advances to step S206 to decrement the value of discharge inspection threshold voltage (TH) by "1", and then returns to step S203.

As described above, in the processes of steps S203 to S206, discharge inspection is repeated for one selected nozzle while changing the value of the discharge inspection threshold voltage (TH), thereby specifying the change point of the inspection result at which the judgment result signal RSLT changes from "0" to "1". The change point of the inspection result is synonymous with the value of the peak of the temperature change waveform. In step S207, the value of the discharge inspection threshold voltage (TH) corresponding to the change point of the inspection result is temporarily saved in the RAM 421.

In this embodiment, as described above, the value of the discharge inspection threshold voltage can be set at 256 stages. Therefore, by executing discharge inspection at most 256 times for each nozzle, it is possible to specify the change points of the inspection results of all the nozzles.

In step S208, the discharge inspection threshold voltage (TH) corresponding to the change point of the last inspection result saved in advance in the non-volatile memory such as an EEPROM is read out, and the difference between the readout discharge inspection threshold voltage (TH) and the discharge inspection threshold voltage (TH) corresponding to the change point of the inspection result obtained in the current inspection processing is calculated. Furthermore, in step S209, it is checked whether the absolute value (|D|) of the calculated difference is larger than a predetermined range (RANGE). If |D| ≤ RANGE, that is, the absolute value of the difference falls within the predetermined range, the process advances to step S210 to judge that the nozzle is in a normal discharge enable status, and then advances to step S212. On the other hand, if |D| > RANGE, that is, the absolute value of the difference falls outside the predetermined range, the process advances to step S211 to judge that the nozzle is in the discharge failure status, and then advances to step S213.

Note that the difference between the discharge inspection threshold voltages (TH) corresponding to the change points of the current and last inspection result is calculated but the present invention is not limited to this. As long as a difference can be used to judge the status of the nozzle in step S208, it is possible to calculate a difference in discharge inspection threshold voltages corresponding to the change points of the inspection results between the current inspection processing and predetermined past inspection processing instead of the last inspection processing. For example, a difference with respect to an inspection result before the last may be calculated. Alternatively, a difference from a representative value such as the maximum, minimum, or average value of the history of the change points of the past inspection results may be calculated.

As described above, the reason why the discharge status of each nozzle is judged based on the information about the change point of the specified inspection result is that the information about the change point of the inspection result of the specified nozzle needs to be a value obtained in the normal discharge status.

The above-described predetermined range is appropriately set in accordance with a system in consideration of the characteristic of the temperature detection element, the ink characteristic, a detection error, a variation of repetitive inspection, a tolerable variation, an update frequency, and the like. In this embodiment, a case in which the change point of the current inspection result is away from the last one by more than "-5" is set as a range for judging a discharge failure. The discharge status is judged based on a variation of the discharge inspection threshold voltage (TH) corresponding to the change point of the last inspection result of each nozzle. However, in the first inspection after replacement of the printhead, there is no information for the change point of the last inspection result, and thus the same processing is performed with reference to the information about the change point of the inspection result saved in advance in the non-volatile memory mounted on the printhead. This judges the discharge status for each nozzle. For a nozzle judged to be in the discharge failure status, prohibition of discharge is set to reduce degradation in image quality as much as possible, and the nozzle is processed as an image quality correction control target nozzle.

In step S212, for a nozzle judged to be in the normal discharge status, the value of the discharge inspection threshold voltage (TH) is determined as a new discharge inspection threshold voltage (TH) based on the change point of the inspection result in the RAM 421. As the discharge inspection threshold voltage (TH), a voltage lower than the change point of the inspection result by a predetermined amount is set in consideration of the characteristic of the temperature detection element, the ink characteristic, a detection error, a variation of repetitive inspection, the tolerable variation of the change point of the inspection result, an update frequency, and the like. If the discharge inspection threshold voltage has a value of 255, a value lower than the voltage corresponding to the change point of the inspection result by about 5 is set. Note that the value of the discharge inspection threshold voltage (TH) corresponding to the change point of the inspection result may be determined as a new discharge inspection threshold voltage.

Then, update processing is performed using the new discharge inspection threshold voltage so as to judge the next discharge status based on this value. At this time, the updated value may be restricted in accordance with the value of the discharge inspection threshold voltage corresponding to the change point of the inspection result. Furthermore, as for the discharge inspection threshold voltage corresponding to the change point of the inspection result for the nozzle judged to be in the discharge failure status, the last value is continuously held without performing update processing, and the next discharge status is judged based on this value.

In step S213, the discharge status judgment result saved in the EEPROM is updated by the discharge status judgment result of each nozzle, and used for the above-described image quality correction control or the like.

Lastly, in step S214, it is checked whether all the target nozzles have been inspected. If it is determined to continue inspection, the process returns to step S201 to select another inspection target nozzle, and then the processes in step S202 and the subsequent steps are executed. On the other hand, if it is determined to end inspection, the discharge judgment threshold value reset processing ends.

Therefore, according to the above-described embodiment, each nozzle is inspected at each predetermined timing to check whether the change point of the inspection result varies, thereby resetting an appropriate discharge inspection threshold voltage for each nozzle. Thus, even if the characteristic of the print element or the temperature detection element changes due to a different use status of each print element, it is possible to correctly judge the discharge status of each print element, and always perform satisfactory image printing.

### [Second Embodiment]

The first embodiment has explained an example of executing discharge inspection for all settable stages (in this example, 256 stages) of the inspection threshold value and specifying a change point of an inspection result. However, the inspection time tends to be long. This embodiment will describe an example of shortening the time until a change point of an inspection result is specified.

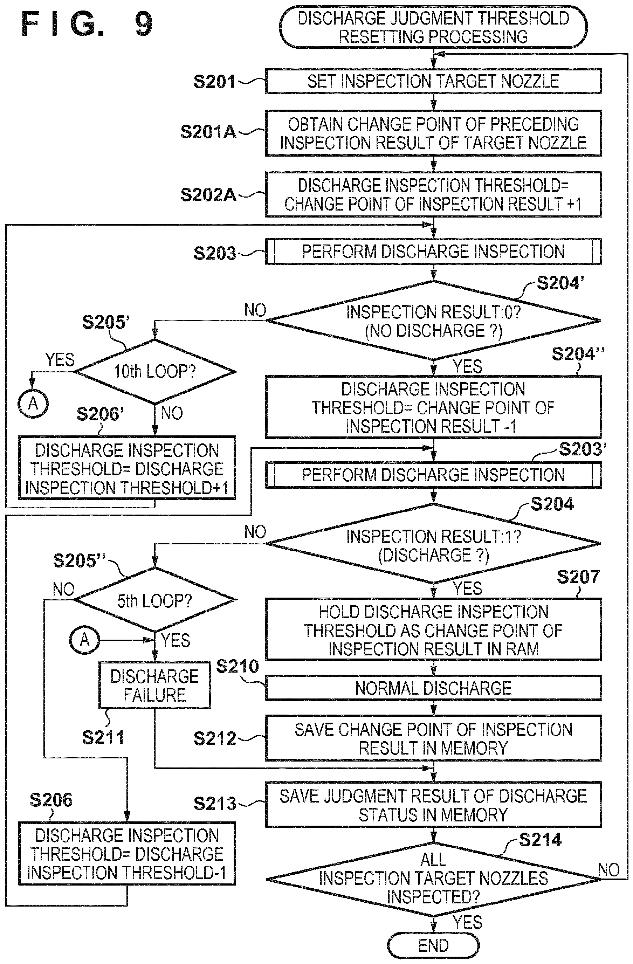

Fig. 9 is a flowchart illustrating processing of resetting a discharge inspection threshold voltage. Note that in Fig. 9, the same step numbers as those already described with reference to Fig. 8 denote the same processing steps, and a description thereof will be omitted. Only processing steps unique to this embodiment will be described.

After step S201, in step S201A, a discharge inspection threshold voltage (TH) corresponding to a change point of a last inspection result saved in advance in a non-volatile memory such as an EEPROM is read out. In step S202A, a discharge inspection threshold voltage (TH) of a target nozzle is set to a value obtained by incrementing the value obtained in step S201A by "1". The reason why the value is set in this way is that the change point of the inspection result is highly probably near the change point of the last inspection result.

After that, in step S203, discharge inspection is executed using the set discharge inspection threshold voltage (TH). In step S204', it is checked based on the set discharge inspection threshold voltage (TH) whether the discharge status of the selected nozzle is a normal discharge status or a discharge failure status. If a judgment result signal RSLT is "0", the process advances to step S204". On the other hand, if the judgment result signal RSLT is "1", the process advances to step S205'. In step S205', it is checked whether the ordinal number of execution of discharge inspection in step S203 is 10. If the ordinal number of the execution of discharge inspection is 10, the process advances to step S211. If the ordinal number of the execution of discharge inspection is smaller than 10, the process advances to step S206' to increment the value of the discharge inspection threshold voltage (TH) by "1", and then returns to step S203.

As described above, in the processes of steps S203 and S204' to S206', it is checked whether a change point is found in the inspection result when increasing the value of the discharge inspection threshold voltage (TH) from the discharge inspection threshold voltage (TH) corresponding to the change point of the last inspection result within a predetermined range.

Next, in step S204", the discharge inspection threshold voltage (TH) of the target nozzle is set to a value obtained by decrementing the value obtained in step S201A by "1". Next, in step S203', discharge inspection is executed using the set discharge inspection threshold voltage (TH), similar to step S203. In step S204, it is checked based on the set discharge inspection threshold voltage (TH) whether the discharge status of the selected nozzle is the normal discharge status or the discharge failure status. If the judgment result signal RSLT is "1", the process advances to step S207. On the other hand, if the judgment result signal RSLT is "0", the process advances to step S205". In step S205", it is checked whether the ordinal number of execution of discharge inspection in step S203' is five. If the ordinal number of the execution of discharge inspection is five, the process advances to step S211. If the ordinal number of the execution of discharge inspection is smaller than five, the process advances to step S206 to decrement the value of the discharge inspection threshold voltage (TH) by "1", and then returns to step S203'.

As described above, in the processes of steps S203', S204, S205", and S206, it is checked whether a change point is found in the inspection result when decreasing the value of the discharge inspection threshold voltage (TH) from the discharge inspection threshold voltage (TH) corresponding to the change point of the last inspection result within a predetermined range.

With the above processing, by increasing/decreasing stepwise the value of the discharge inspection threshold voltage (TH) from the discharge inspection threshold voltage (TH) corresponding to the change point of the last inspection result within a predetermined range, it is possible to specify a discharge inspection threshold voltage at which the discharge judgment result changes. In this embodiment, a discharge failure is judged when it is impossible to specify a change point of an inspection result even by increasing the discharge inspection threshold voltage in 10 stages and decreasing the discharge inspection threshold voltage in five stages. Furthermore, in this embodiment, it is possible to obtain the difference from the discharge inspection threshold voltage corresponding to the change point of the last inspection result by counting the number of times the discharge inspection threshold voltage is changed stepwise, and the count value is restricted. Thus, it is possible to simultaneously judge whether the difference from the discharge inspection threshold voltage corresponding to the change point of the last inspection result falls within a predetermined range.

In steps S207 and S210 to S214, the same processes as those described in the first embodiment are performed.

Therefore, according to the above-described embodiment, since the discharge inspection threshold voltage corresponding to the change point of the last inspection result is set as a start point, and the change point of the inspection result is specified while changing the discharge inspection threshold voltage, it is possible to efficiently reset the discharge inspection threshold voltage of each nozzle. Therefore, as compared with the first embodiment, it is possible to specify the change point of the inspection result by two discharge inspection operations at minimum, thereby largely shortening the processing time.

While the present invention has been described with reference to exemplary embodiments, it is to be understood that the invention is not limited to the disclosed exemplary embodiments. The invention is defined by the appended claims.

## Claims

1. A printing apparatus (1000) comprising:
a printhead (3) including a plurality of nozzles (313) each configured to discharge ink, a plurality of heaters (309) respectively provided in the plurality of nozzles and each configured to generate thermal energy used for discharging the ink through the nozzle, a plurality of temperature detection elements (306) provided in correspondence with the plurality of heaters, and an inspection circuit (5) configured to inspect (S13) ink discharge statuses of the plurality of nozzles based on temperature detection results obtained by using the plurality of temperature detection elements and a discharge inspection threshold (TH) for each nozzle; further comprising:
inspection means (427) configured to cause, in a process of resetting the discharge inspection threshold, the printhead to inspect (S203, S203') an ink discharge status by selecting (S201), from the plurality of nozzles of the printhead, a nozzle as a target of inspection of the ink discharge status, setting a threshold value for inspecting a temperature detection result of one of the plurality of temperature detection elements corresponding to the selected nozzle for inspection of the selected nozzle, and using the inspection circuit and the set threshold value;
reception means (427) configured to receive (S204, S204'), in the process of resetting the discharge inspection threshold, from the printhead, an inspection result indicating whether or not the temperature detection result exceeds the threshold value, obtained by inspecting the ink discharge status using the threshold value for the nozzle selected by the inspection means;
determination means (419) configured to determine (S206, S206'), in the process of resetting the discharge inspection threshold, based on the inspection result received by the reception means, a threshold value to be used by the inspection means for inspecting the ink discharge status of the selected nozzle in a subsequent inspection, wherein the threshold value is changed stepwise for all settable values, or is increased or decreased stepwise within a predetermined range starting from a threshold voltage corresponding to a change point of the inspection result obtained in a past process of resetting the discharge inspection threshold and stored in storage means, and the current inspection by the inspection means is repeated until a threshold value corresponding to a change point of the inspection result is specified;
judgment means (419) configured to judge (S21 1), if a difference between threshold values corresponding to the change points of the inspection results obtained in the current and the past process is larger than a predetermined range, a discharge failure for the selected nozzle, and judge (S210), if the difference falls within the predetermined range, a normal discharge status for the selected nozzle; and
storage means (421) configured to store (S207, S212), if the selected nozzle is judged to be in the normal discharge status, the threshold value specifying the change point of the inspection result determined by the determination means as a reset discharge inspection threshold for the inspection circuit.

2. The apparatus according to claim 1, wherein
the inspection means (427) includes:
signal generation means (7) configured to generate a selection signal for selecting, among the plurality of nozzles, a nozzle as a target of inspection of the ink discharge status and an inspection threshold signal indicating the threshold value, and to output the selection signal and the inspection threshold signal to the printhead; and
instruction means (7) configured to issue an instruction to change the nozzle indicated by the selection signal generated by the signal generation means and the threshold value indicated by the inspection threshold signal.

3. The apparatus according to claim 2, wherein the change in the inspection result signal indicates one of a change of the inspection result from normal discharge to discharge failure and a change of the inspection result from discharge failure to normal discharge.

4. The apparatus according to claim 2 or 3, configured such that the instruction means instructs nozzles as inspection targets of the inspection means one by one.

5. The apparatus according to claim 4, configured such that the instruction means changes the threshold value by a predetermined value from a possible maximum value of the threshold value, each time a change is to be made.

6. The apparatus according to claim 4, configured such that the instruction means changes the threshold value by a predetermined value from a threshold value obtained in last inspection and stored in the storage means, each time a change is to be made.

7. The apparatus according to claim 6, configured such that based on a judgment result by the judgment means, the storage means further stores information indicating a nozzle in a normal discharge status and a nozzle in a discharge failure status.

8. The apparatus according to claim 2, configured such that the inspection circuit of the printhead compares the threshold value indicated by the inspection threshold signal and temperature information indicating the discharge status of the nozzle obtained from the temperature detection element corresponding to the heater provided in the nozzle selected by the selection signal from the plurality of nozzles, inspects the discharge status of the selected nozzle based on a result of the comparison, and outputs an inspection result.

9. The apparatus according to claim 8, configured such that the temperature information indicates a temporal change in temperature obtained from the temperature detection element.

10. The apparatus according to any one of claims 1 to 9, configured such that inspection by the inspection means is performed at at least one of timings set by a paper feeding count, a print dot count, an elapsed period after last inspection, a timing of replacement of the printhead, a timing of recovery processing of the printhead, a timing for each print job, and a timing for each print page.

11. The apparatus according to any one of claims 1 to 10, configured such that the storage means stores a plurality of thresholds corresponding to the plurality of nozzles, respectively.

12. A discharge status judgment method for a printing apparatus (1000) comprising a printhead (3) including a plurality of nozzles (313) each configured to discharge ink, a plurality of heaters (309) respectively provided in the plurality of nozzles and each configured to generate thermal energy used for discharging the ink through the nozzle, a plurality of temperature detection elements (306) provided in correspondence with the plurality of heaters, and an inspection circuit (5) configured to inspect (S13) ink discharge statuses of the plurality of nozzles based on temperature detection results obtained by using the plurality of temperature detection elements and a discharge inspection threshold (TH) for each nozzle, the method comprising steps of:
inspecting (S203, S203'), in a process of resetting the discharge inspection threshold, by the printhead, an ink discharge status by selecting (S201), from the plurality of nozzles of the printhead, a nozzle as a target of inspection of the ink discharge status, setting a threshold value for judging a temperature detection result of one of the plurality of temperature detection elements corresponding to the selected nozzle for inspection of the selected nozzle, and using the inspection circuit and the set threshold value;
receiving (S204, S204'), in the process of resetting the discharge inspection threshold, from the printhead, an inspection result indicating whether or not the temperature detection result exceeds the threshold value, obtained by inspecting the ink discharge status using the threshold value for the selected nozzle;
determining (S206, S206'), in the process of resetting the discharge inspection threshold, based on the received inspection result, a threshold value to be used in the inspecting step for inspecting the discharge status of the selected nozzle in a subsequent inspection, wherein the threshold value is changed stepwise for all settable values, or is increased or decreased stepwise within a predetermined range starting from a threshold voltage corresponding to a change point of the inspection result obtained in a past process of resetting the discharge inspection threshold, and the current inspection in the inspecting step is repeated until a threshold value corresponding to a change point of the inspection result is specified;
judging (S211), if a difference between threshold values corresponding to the change points of the inspection results obtained in the current and the past process is larger than a predetermined range, a discharge failure for the selected nozzle, and judging (S210), if the difference falls within the predetermined range, a normal discharge status for the selected nozzle; and
storing (S207, S212), if the selected nozzle is judged to be in the normal discharge status, the determined threshold value specifying the change point of the inspection result in a memory (421) as a reset discharge inspection threshold for the inspection circuit.

13. The method according to claim 12, wherein
the inspecting step includes:
generating (S201) a selection signal for selecting, among the plurality of nozzles, a nozzle as a target of inspection of the ink discharge status and an inspection threshold signal indicating the threshold value, and outputting the selection signal and the inspection threshold signal to the printhead; and
issuing an instruction to change the nozzle indicated by the selection signal and the threshold value indicated by the inspection threshold signal.

14. The apparatus according to any one of claims 1 to 11, wherein
the determination means (419) determines (S206, S206'), in the process of resetting the discharge inspection threshold, based on the inspection result received by the reception means, the threshold value to be used by the inspection means, wherein the threshold value is increased or decreased stepwise within a predetermined range starting from the threshold voltage, and the current inspection by the inspection means is repeated until the threshold value is specified.

15. The apparatus according to claim 14, wherein
in a case where the determination means (419) does not determine, in the process of resetting the discharge inspection threshold, the threshold value even if the threshold value is increased by a predetermined amount, the determination means determines the threshold value by decreasing the threshold value from the threshold voltage.

## Patentansprüche

1. Druckvorrichtung (1000), umfassend:
einen Druckkopf (3) einschließlich mehrerer Düsen (313), die jeweils konfiguriert sind, Tinte auszustoßen, mehrerer jeweils in den mehreren Düsen vorgesehener Heizelemente (309), die jeweils konfiguriert sind, Wärmeenergie zu erzeugen, die zum Ausstoßen der Tinte durch die Düse verwendet wird, mehrerer Temperaturdetektionselemente (306), die entsprechend den mehreren Heizelementen vorgesehen sind, und einer Prüfschaltung (5), die konfiguriert ist zum Prüfen (S13) von Tintenausstoßzuständen der mehreren Düsen basierend auf Temperaturdetektionsergebnissen, die durch Verwenden der mehreren Temperaturdetektionselemente und eines Ausstoßprüfschwellenwerts (TH) für eine jeweilige Düse erhalten werden;
ferner umfassend:
eine Prüfungseinrichtung (427), die konfiguriert ist, in einem Prozess des Zurücksetzens des Ausstoßprüfschwellenwerts den Druckkopf zu veranlassen, einen Tintenausstoßzustand zu prüfen (S203, S203'), indem aus den mehreren Düsen des Druckkopfs eine Düse als ein Ziel der Prüfung des Tintenausstoßzustands ausgewählt wird (S201), zur Prüfung der ausgewählten Düse ein Schwellenwert zum Prüfen eines Temperaturdetektionsergebnisses eines der ausgewählten Düse entsprechenden der mehreren Temperaturdetektionselemente eingestellt wird, und die Prüfschaltung und der eingestellte Schwellenwert verwendet werden;
eine Empfangseinrichtung (427), die konfiguriert ist, im Prozess des Zurücksetzens des Ausstoßprüfschwellenwerts vom Druckkopf ein Prüfungsergebnis zu empfangen (S204, S204'), das angibt, ob das Temperaturdetektionsergebnis den durch Prüfen des Tintenausstoßzustands unter Verwendung des Schwellenwerts für die durch die Prüfungseinrichtung ausgewählte Düse erhaltenen Schwellenwert überschreitet;
eine Bestimmungseinrichtung (419), die konfiguriert ist, im Prozess des Zurücksetzens des Ausstoßprüfschwellenwerts basierend auf dem durch die Empfangseinrichtung empfangenen Prüfungsergebnis einen Schwellenwert zu bestimmen (S206, S206'), der durch die Prüfungseinrichtung zum Prüfen des Tintenausstoßzustands der ausgewählten Düse bei einer nachfolgenden Prüfung verwendet werden soll, wobei der Schwellenwert schrittweise für alle einstellbaren Werte geändert wird oder innerhalb eines vorbestimmten Bereichs schrittweise erhöht oder verringert wird, beginnend bei einer Schwellenspannung, die einem Änderungspunkt des Prüfungsergebnisses entspricht, das in einem früheren Prozess des Zurücksetzens des Ausstoßprüfschwellenwerts erhalten und in einer Speichereinrichtung gespeichert wurde, und wobei die aktuelle Prüfung durch die Prüfungseinrichtung wiederholt wird, bis ein Schwellenwert spezifiziert wird, der einem Änderungspunkt des Prüfungsergebnisses entspricht;
eine Beurteilungseinrichtung (419), die konfiguriert ist, falls eine Differenz zwischen Schwellenwerten, die den im aktuellen und im früheren Prozess erhaltenen Änderungspunkten der Prüfungsergebnisse entsprechen, größer als ein vorbestimmter Bereich ist, einen fehlerhaften Ausstoß für die ausgewählte Düse zu beurteilen (S211), und falls die Differenz innerhalb des vorbestimmten Bereichs fällt, einen normalen Ausstoßzustand für die ausgewählte Düse zu beurteilen (S210); und
eine Speichereinrichtung (421), die konfiguriert ist, falls beurteilt wird, dass sich die ausgewählte Düse im normalen Ausstoßzustand befindet, den Schwellenwert, der den durch die Bestimmungseinrichtung bestimmten Änderungspunkt des Prüfungsergebnisses spezifiziert, als einen Rücksetzausstoßprüfschwellenwert für die Prüfungsschaltung zu speichern (S207, S212).

2. Vorrichtung nach Anspruch 1, wobei
die Prüfungseinrichtung (427) enthält:
eine Signalerzeugungseinrichtung (7), die konfiguriert ist, ein Auswahlsignal zum Auswählen einer Düse aus den mehreren Düsen als ein Ziel der Prüfung des Tintenausstoßzustands und ein Prüfungsschwellenwertsignal, das den Schwellenwert angibt, zu erzeugen und das Auswahlsignal und das Prüfungsschwellenwertsignal an den Druckkopf auszugeben; und
eine Anweisungseinrichtung (7), die konfiguriert ist, eine Anweisung auszugeben, die von dem durch die Signalerzeugungseinrichtung erzeugten Auswahlsignal angegebene Düse und den durch das Prüfungsschwellenwertsignal angegebenen Schwellenwert zu ändern.

3. Vorrichtung nach Anspruch 2, wobei die Änderung des Prüfungsergebnissignals eine Änderung des Prüfungsergebnisses vom normalen Ausstoß zum fehlerhaften Ausstoß oder eine Änderung des Prüfungsergebnisses vom fehlerhaften Ausstoß zum normalen Ausstoß angibt.

4. Vorrichtung nach Anspruch 2 oder 3, die so konfiguriert ist, dass die Anweisungseinrichtung Düsen einzeln als Prüfungsziele der Prüfungseinrichtung anweist.

5. Vorrichtung nach Anspruch 4, die so konfiguriert ist, dass die Anweisungseinrichtung den Schwellenwert jedes Mal, wenn eine Änderung vorgenommen werden soll, um einen vorbestimmten Wert von einem möglichen Maximalwert des Schwellenwerts ändert.

6. Vorrichtung nach Anspruch 4, die so konfiguriert ist, dass die Anweisungseinrichtung den Schwellenwert jedes Mal, wenn eine Änderung vorgenommen werden soll, um einen vorbestimmten Wert von einem bei der letzten Prüfung erhaltenen und in der Speichereinrichtung gespeicherten Schwellenwert ändert.

7. Vorrichtung nach Anspruch 6, die so konfiguriert ist, dass die Speichereinrichtung basierend auf einem Beurteilungsergebnis durch die Beurteilungseinrichtung ferner Informationen speichert, die eine Düse in einem normalen Ausstoßzustand und eine Düse in einem fehlerhaften Ausstoßzustand angeben.

8. Vorrichtung nach Anspruch 2, die so konfiguriert ist, dass die Prüfschaltung des Druckkopfs den durch das Prüfungsschwellenwertsignal angegebenen Schwellenwert mit Temperaturinformationen über den Ausstoßzustand der Düse vergleicht, die vom Temperaturdetektionselement erhalten werden, das dem Heizelement entspricht, welches in der durch das Auswahlsignal aus den mehreren Düsen ausgewählten Düse vorgesehen ist; den Ausstoßzustand der ausgewählten Düse basierend auf einem Ergebnis des Vergleichs prüft und ein Prüfergebnis ausgibt.

9. Vorrichtung nach Anspruch 8, die so konfiguriert ist, dass die Temperaturinformationen eine zeitliche Änderung der vom Temperaturdetektionselement erhaltenen Temperatur angeben.

10. Vorrichtung nach einem der Ansprüche 1 bis 9, die so konfiguriert ist, dass eine Prüfung durch die Prüfungseinrichtung zu mindestens einem von Zeitpunkten durchgeführt wird, die durch eine Papierzufuhrzählung, eine Druckpunktzählung, einen seit der letzten Prüfung verstrichenen Zeitraum, einen Zeitpunkt des Austauschs des Druckkopfs, einen Zeitpunkt der Wiederherstellungsverarbeitung des Druckkopfs, einen Zeitpunkt für einen jeweiligen Druckauftrag und einen Zeitpunkt für eine jeweilige Druckseite festgelegt sind.

11. Vorrichtung nach einem der Ansprüche 1 bis 10, die so konfiguriert ist, dass die Speichereinrichtung mehrere den mehreren Düsen jeweils entsprechende Schwellenwerte speichert.

12. Ausstoßzustandsbeurteilungsverfahren für eine Druckvorrichtung (1000), umfassend einen Druckkopf (3) einschließlich mehrerer Düsen (313), die jeweils konfiguriert sind, Tinte auszustoßen, mehrerer Heizelemente (309), die jeweils in den mehreren Düsen vorgesehen sind und jeweils konfiguriert sind, Wärmeenergie zu erzeugen, die zum Ausstoßen der Tinte durch die Düse verwendet wird, mehrerer Temperaturdetektionselemente (306), die entsprechend den mehreren Heizelementen vorgesehen sind, und einer Prüfschaltung (5), die konfiguriert ist zum Prüfen (S13) von Tintenausstoßzuständen der mehreren Düsen basierend auf Temperaturdetektionsergebnissen, die durch Verwenden der mehreren Temperaturdetektionselemente und eines Ausstoßprüfschwellenwerts (TH) für eine jeweilige Düse erhalten werden, wobei das Verfahren die folgenden Schritte umfasst:
Prüfen (S203, S203'), in einem Prozess des Zurücksetzens des Ausstoßprüfschwellenwerts, eines Tintenausstoßzustands durch den Druckkopf durch Auswählen (S201) einer Düse aus den mehreren Düsen des Druckkopfs als ein Ziel der Prüfung des Tintenausstoßzustands, Einstellen eines Schwellenwerts zum Beurteilen eines Temperaturdetektionsergebnisses eines der mehreren Temperaturdetektionselemente, das der ausgewählten Düse entspricht, zur Prüfung der ausgewählten Düse, und Verwenden der Prüfschaltung und des eingestellten Schwellenwerts;
Empfangen (S204, S204'), im Prozess des Zurücksetzens des Ausstoßprüfschwellenwerts, eines Prüfungsergebnisses vom Druckkopf, das angibt, ob das Temperaturdetektionsergebnis den Schwellenwert überschreitet, der durch Prüfen des Tintenausstoßzustands unter Verwendung des Schwellenwerts für die ausgewählte Düse erhalten wird;
Bestimmen (S206, S206'), im Prozess des Zurücksetzens des Ausstoßprüfschwellenwerts, basierend auf dem empfangenen Prüfungsergebnis, eines Schwellenwerts, der im Prüfungsschritt zum Prüfen des Ausstoßzustands der ausgewählten Düse bei einer nachfolgenden Prüfung verwendet werden soll, wobei der Schwellenwert schrittweise für alle einstellbaren Werte geändert wird oder innerhalb eines vorbestimmten Bereichs schrittweise erhöht oder verringert wird, beginnend bei einer Schwellenspannung, die einem Änderungspunkt des Prüfungsergebnisses entspricht, das in einem früheren Prozess des Zurücksetzens des Ausstoßprüfschwellenwerts erhalten wurde, und die aktuelle Prüfung im Prüfungsschritt wiederholt wird, bis ein Schwellenwert spezifiziert wird, der einem Änderungspunkt des Prüfungsergebnisses entspricht;
Beurteilen (S211), falls eine Differenz zwischen Schwellenwerten, die den Änderungspunkten der im aktuellen und im früheren Prozess erhaltenen Prüfungsergebnisse entsprechen, größer als ein vorbestimmter Bereich ist, eines fehlerhaften Ausstoßes für die ausgewählte Düse und Beurteilen (S210), falls die Differenz innerhalb des vorbestimmten Bereichs fällt, eines normalen Ausstoßzustands für die ausgewählte Düse; und
Speichern (S207, S212), falls beurteilt wird, dass sich die ausgewählte Düse im normalen Ausstoßzustand befindet, des bestimmten Schwellenwerts, der den Änderungspunkt des Prüfungsergebnisses spezifiziert, in einem Speicher (421) als einen Rücksetzausstoßprüfschwellenwert für die Prüfungsschaltung.

13. Verfahren nach Anspruch 12, wobei
der Prüfschritt enthält:
Erzeugen (S201) eines Auswahlsignals zum Auswählen einer Düse aus den mehreren Düsen als ein Ziel der Prüfung des Tintenausstoßzustands und eines Prüfungsschwellenwertsignals, das den Schwellenwert angibt, und Ausgeben des Auswahlsignals und des Prüfungsschwellenwertsignals an den Druckkopf; und
Ausgeben einer Anweisung, die durch das Auswahlsignal angegebene Düse und den durch das Prüfungsschwellenwertsignal angegebenen Schwellenwert zu ändern.

14. Vorrichtung nach einem der Ansprüche 1 bis 11, wobei
die Bestimmungseinrichtung (419) im Prozess des Zurücksetzens des Ausstoßprüfschwellenwerts basierend auf dem durch die Empfangseinrichtung empfangenen Prüfungsergebnis den durch die Prüfungseinrichtung zu verwendenden Schwellenwert bestimmt (S206, S206'), wobei der Schwellenwert schrittweise innerhalb eines vorbestimmten Bereichs erhöht oder verringert wird, beginnend bei der Schwellenspannung, und die aktuelle Prüfung durch die Prüfungseinrichtung wiederholt wird, bis der Schwellenwert spezifiziert ist.

15. Vorrichtung nach Anspruch 14, wobei
falls die Bestimmungseinrichtung (419) im Prozess des Zurücksetzens des Ausstoßprüfschwellenwerts den Schwellenwert nicht bestimmt, selbst wenn der Schwellenwert um einen vorbestimmten Betrag erhöht ist, die Bestimmungseinrichtung den Schwellenwert durch Verringern des Schwellenwerts von der Schwellenspannung bestimmt.

## Revendications

1. Appareil d'impression (1000) comprenant :
une tête d'impression (3) comportant une pluralité de buses (313) configurées chacune pour décharger de l'encre, une pluralité d'éléments chauffants (309) respectivement prévus dans la pluralité de buses et configurés chacun pour générer de l'énergie thermique utilisée pour décharger l'encre à travers la buse, une pluralité d'éléments de détection de température (306) prévus en correspondance avec la pluralité d'éléments chauffants, et un circuit d'inspection (5) configuré pour inspecter (S13) des états de décharge d'encre de la pluralité de buses sur la base de résultats de détection de température obtenus par utilisation de la pluralité d'éléments de détection de température et d'un seuil d'inspection de décharge (TH) pour chaque buse ;
comprenant en outre :
un moyen d'inspection (427) configuré pour amener, lors d'un processus de réinitialisation du seuil d'inspection de décharge, la tête d'impression à inspecter (S203, S203') un état de décharge d'encre en sélectionnant (S201), parmi la pluralité de buses de la tête d'impression, une buse en tant que cible d'inspection de l'état de décharge d'encre, régler une valeur de seuil pour inspecter un résultat de détection de température de l'un de la pluralité d'éléments de détection de température correspondant à la buse sélectionnée pour l'inspection de la buse sélectionnée, et utiliser le circuit d'inspection et la valeur de seuil réglée ;
un moyen de réception (427) configuré pour recevoir (S204, S204'), lors du processus de réinitialisation du seuil d'inspection de décharge, en provenance de la tête d'impression, un résultat d'inspection indiquant si le résultat de détection de température dépasse ou non la valeur de seuil, obtenu en inspectant l'état de décharge d'encre en utilisant la valeur de seuil pour la buse sélectionnée par le moyen d'inspection ;
un moyen de détermination (419) configuré pour déterminer (S206, S206'), lors du processus de réinitialisation du seuil d'inspection de décharge, sur la base du résultat d'inspection reçu par le moyen de réception, une valeur de seuil à utiliser par le moyen d'inspection pour inspecter l'état de décharge d'encre de la buse sélectionnée lors d'une inspection ultérieure, où la valeur de seuil est modifiée par étapes pour toutes les valeurs réglables, ou est augmentée ou diminuée par étapes dans une plage prédéterminée en partant d'une tension de seuil correspondant à un point de variation du résultat d'inspection obtenu lors d'un processus antérieur de réinitialisation du seuil d'inspection de décharge et stocké dans un moyen de stockage, et l'inspection actuelle par le moyen d'inspection est répétée jusqu'à ce qu'une valeur de seuil correspondant à un point de variation du résultat d'inspection soit spécifiée ;
un moyen de jugement (419) configuré pour juger (5211), si une différence entre des valeurs de seuil correspondant aux points de variation des résultats d'inspection obtenus lors des processus actuel et antérieur est supérieure à une plage prédéterminée, qu'il se produit un défaut de décharge pour la buse sélectionnée, et juger (S210), si la différence se situe dans la plage prédéterminée, que l'état de décharge est normal pour la buse sélectionnée ; et
un moyen de stockage (421) configuré pour stocker (S207, S212), s'il est jugé que la buse sélectionnée est dans l'état de décharge normal, la valeur de seuil spécifiant le point de variation du résultat d'inspection déterminé par le moyen de détermination en tant que seuil d'inspection de décharge réinitialisé pour le circuit d'inspection.

2. Appareil selon la revendication 1, dans lequel le moyen d'inspection (427) comprend :
un moyen générateur de signal (7) configuré pour générer un signal de sélection pour sélectionner, parmi la pluralité de buses, une buse en tant que cible d'inspection de l'état de décharge d'encre et un signal de seuil d'inspection indiquant la valeur de seuil, et pour fournir en sortie le signal de sélection et le signal de seuil d'inspection à la tête d'impression ; et
un moyen d'instruction (7) configuré pour émettre une instruction destinée à modifier la buse indiquée par le signal de sélection généré par le moyen générateur de signal et la valeur de seuil indiquée par le signal de seuil d'inspection.

3. Appareil selon la revendication 2, dans lequel la variation du signal de résultat d'inspection indique l'une d'une variation du résultat d'inspection d'une décharge normale à un défaut de décharge et d'une variation du résultat d'inspection d'un défaut de décharge à une décharge normale.

4. Appareil selon la revendication 2 ou 3, configuré de telle sorte que le moyen d'instruction envoie des instructions à des buses, une par une, en tant que cibles d'inspection du moyen d'inspection.

5. Appareil selon la revendication 4, configuré de telle sorte que le moyen d'instruction modifie la valeur de seuil d'une valeur prédéterminée par rapport à une valeur maximale possible de la valeur de seuil, chaque fois qu'une modification doit être effectuée.

6. Appareil selon la revendication 4, configuré de telle sorte que le moyen d'instruction modifie la valeur de seuil d'une valeur prédéterminée par rapport à une valeur de seuil obtenue lors de la dernière inspection et stockée dans le moyen de stockage, chaque fois qu'une modification doit être effectuée.

7. Appareil selon la revendication 6, configuré de telle sorte que, sur la base d'un résultat de jugement fourni par le moyen de jugement, le moyen de stockage stocke en outre des informations indiquant une buse dans un état de décharge normal et une buse dans un état de défaut de décharge.

8. Appareil selon la revendication 2, configuré de telle sorte que le circuit d'inspection de la tête d'impression compare la valeur de seuil indiquée par le signal de seuil d'inspection et des informations de température indiquant l'état de décharge de la buse, obtenues en provenance de l'élément de détection de température correspondant à l'élément chauffant prévu dans la buse sélectionnée par le signal de sélection parmi la pluralité de buses, inspecte l'état de décharge de la buse sélectionnée sur la base d'un résultat de la comparaison, et délivre en sortie un résultat d'inspection.

9. Appareil selon la revendication 8, configuré de telle sorte que les informations de température indiquent une variation temporelle de température obtenue en provenance de l'élément de détection de température.

10. Appareil selon l'une quelconque des revendications 1 à 9, configuré de telle sorte que l'inspection effectuée par le moyen d'inspection est effectuée à au moins l'un de temps réglés par un compte d'alimentation en papier, d'un compte de points d'impression, d'une période écoulée après la dernière inspection, d'un temps de remplacement de la tête d'impression, d'un temps de traitement de récupération de la tête d'impression, d'un temps pour chaque tâche d'impression, et d'un temps pour chaque page d'impression.

11. Appareil selon l'une quelconque des revendications 1 à 10, configuré de telle sorte que le moyen de stockage stocke respectivement une pluralité de seuils correspondant à la pluralité de buses.

12. Procédé de jugement d'état de décharge destiné à un appareil d'impression (1000) comprenant une tête d'impression (3) comportant une pluralité de buses (313) configurées chacune pour décharger de l'encre, une pluralité d'éléments chauffants (309) respectivement prévus dans la pluralité de buses et configurés chacun pour générer de l'énergie thermique utilisée pour décharger l'encre à travers la buse, une pluralité d'éléments de détection de température (306) prévus en correspondance avec la pluralité d'éléments chauffants, et un circuit d'inspection (5) configuré pour inspecter (S13) des états de décharge d'encre de la pluralité de buses sur la base de résultats de détection de température obtenus par utilisation de la pluralité d'éléments de détection de température et d'un seuil d'inspection de décharge (TH) pour chaque buse, le procédé comprenant les étapes consistant en :
l'inspection (S203, S203'), lors d'un processus de réinitialisation du seuil d'inspection de décharge, par la tête d'impression, d'un état de décharge d'encre en sélectionnant (S201), parmi la pluralité de buses de la tête d'impression, une buse en tant que cible d'inspection de l'état de décharge d'encre, le réglage d'une valeur de seuil pour juger d'un résultat de détection de température de l'un de la pluralité d'éléments de détection de température correspondant à la buse sélectionnée pour l'inspection de la buse sélectionnée, et l'utilisation du circuit d'inspection et de la valeur de seuil réglée ;
la réception (S204, S204'), lors du processus de réinitialisation du seuil d'inspection de décharge, en provenance de la tête d'impression, d'un résultat d'inspection indiquant si le résultat de détection de température dépasse ou non la valeur de seuil, obtenu en inspectant l'état de décharge d'encre en utilisant la valeur de seuil pour la buse sélectionnée ;
la détermination (S206, S206'), lors du processus de réinitialisation du seuil d'inspection de décharge, sur la base du résultat d'inspection reçu, d'une valeur de seuil à utiliser lors de l'étape d'inspection destinée à inspecter l'état de décharge de la buse sélectionnée lors d'une inspection ultérieure, où la valeur de seuil est modifiée par étapes pour toutes les valeurs réglables, ou est augmentée ou diminuée par étapes dans une plage prédéterminée en partant d'une tension de seuil correspondant à un point de variation du résultat d'inspection obtenu lors d'un processus antérieur de réinitialisation du seuil d'inspection de décharge, et l'inspection actuelle lors de l'étape d'inspection est répétée jusqu'à ce qu'une valeur de seuil correspondant à un point de variation du résultat d'inspection soit spécifiée ;
le jugement (S211), si une différence entre des valeurs de seuil correspondant aux points de variation des résultats d'inspection obtenus lors des processus actuel et antérieur est supérieure à une plage prédéterminée, du fait qu'il se produit un défaut de décharge pour la buse sélectionnée, et le jugement (S210), si la différence se situe dans la plage prédéterminée, du fait que l'état de décharge est normal pour la buse sélectionnée ; et
le stockage (S207, S212), s'il est jugé que la buse sélectionnée est dans l'état de décharge normal, de la valeur de seuil déterminée spécifiant le point de variation du résultat d'inspection dans une mémoire (421) en tant que seuil d'inspection de décharge réinitialisé pour le circuit d'inspection.

13. Procédé selon la revendication 12, dans lequel l'étape d'inspection comprend :
la génération (S201) d'un signal de sélection pour sélectionner, parmi la pluralité de buses, une buse en tant que cible d'inspection de l'état de décharge d'encre et d'un signal de seuil d'inspection indiquant la valeur de seuil, et la fourniture en sortie du signal de sélection et du signal de seuil d'inspection à la tête d'impression ; et
l'émission d'une instruction destinée à modifier la buse indiquée par le signal de sélection et la valeur de seuil indiquée par le signal de seuil d'inspection.

14. Appareil selon l'une quelconque des revendications 1 à 11, dans lequel
le moyen de détermination (419) détermine (S206, S206'), lors du processus de réinitialisation du seuil d'inspection de décharge, sur la base du résultat d'inspection reçu par le moyen de réception, la valeur de seuil à utiliser par le moyen d'inspection, où la valeur de seuil est augmentée ou diminuée par étapes dans une plage prédéterminée en partant de la tension de seuil, et l'inspection actuelle par le moyen d'inspection est répétée jusqu'à ce que la valeur de seuil soit spécifiée.

15. Appareil selon la revendication 14, dans lequel, dans un cas où le moyen de détermination (419) ne détermine pas, lors du processus de réinitialisation du seuil d'inspection de décharge, la valeur de seuil même si la valeur de seuil est augmentée d'une quantité prédéterminée, le moyen de détermination détermine la valeur de seuil en diminuant la valeur de seuil par rapport à la tension de seuil.
